# EUROPEAN PATENT SPECIFICATION

(11) **EP 1 440 037 B1**
(45) Date of publication and mention of the grant of the patent: **16.02.2005**
(21) Application number: 01982708.8
(22) Date of filing: 31.10.2001
(51) Int. Cl.: C01F 11/18, C09C 1/02, C05D 3/02

(54) **PROCESS FOR GENERATION OF PRECIPITATED CALCIUM CARBONATE FROM CALCIUM CARBONATE RICH INDUSTRIAL BY-PRODUCT**
VERFAHREN ZUR ERZEUGUNG VON FEINTEILIGEM CALCIUMKARBONAT AUS CALCIUMKARBONATREICHEN INDUSTRIELLEN NEBENPRODUKTEN
PROCEDE DE PRODUCTION DE CARBONATE DE CALCIUM PRECIPITE A PARTIR D'UN SOUS-PRODUIT INDUSTRIEL RICHE EN CARBONATE DE CALCIUM

(43) Date of publication of application: 28.07.2004
(73) Proprietor: COUNCIL OF SCIENTIFIC AND INDUSTRIAL RESEARCH, New Delhi 100 001 (IN); Gujarat Narmada Valley Fertilizer Company Limited, 392 015 Gujarat (IN)
(72) Inventor: JASRA, R. V., C. Salt and Marine Che. Res. Inst., 364 002 Gujarat (IN); OZA, P. M., C. Salt and Marine Che. Res. Inst., 364 002 Gujarat (IN); SOMANI, R. S., C. Salt and Marine Che. Res. Inst., 364 002 Gujarat (IN); CHUNNAWALA, J. R., C. Salt and Marine Che. Res. I, 364 002 Gujarat (IN); SHETH, M. V., C. Salt and Marine Che. Res. Inst., 364 002 Gujarat (IN); THAKKAR, V.V., C. Salt and MArine Che. Res. Inst., 364 002 Gujarat (IN); BADHEKA, Y.M., C. Salt and Marine Che. Res. Inst., 364 002 Gujarat (IN); AYYER, J., Gujarat Narmada V. Fertilizer Co Ltd., 392 015 Gujarat (IN); PATEL, V.B., ujarat Narmada V. Fertilizer Co Ltd., 392 015 Gujarat (IN)
(74) Representative: Copsey, Timothy Graham
(86) International application number: PCT/IN2001/000196
(87) International publication number: WO 2003/037795

## Description

### Technical Field

The present invention relates to a process for the production of precipitated calcium carbonate from calcium carbonate rich by-product generated in industrial processes, specifically, in nitrophosphate plants in fertilizer industry.

Precipitated calcium carbonate is produced by calcination of calcium carbonate rich by-product into quick lime in a kiln, followed by slaking or hydration to obtain hydrated lime and subsequently subjecting it to carbonation.

Precipitated calcium carbonate finds varied commercial uses like, in the manufacture of paper, rubber, plastics, glass, textiles, putties, chalks, sealant, adhesives, paints, inks, varnishes, food, cosmetics, dentrifice, chemicals and pharmaceuticals.

### Background Art

Commercial applications of precipitated calcium carbonate require well-defined powder characteristics, particularly, fine particles with a narrow size distribution, uniform shape and crystallinity. Marentette J.M. et al. "Crystallisation of Calcium Carbonate in the presence of PEO-block-PMAA copolymers", Adv. Mater., 9, 647, 1997) have shown that these characteristics play a crucial role in product properties and their control is important for the preparation of industrially useful products. The precipitated calcium carbonate also needs to be substantially free of impurities for being useful for various commercial applications.

Several physical and chemical processes have been reported for the treatment of solid waste containing calcium carbonate. Physical processes requires drying and grinding to such a fineness that impurities can be removed by screening, classification, magnetic separation, hydrocyclone and floatation separation. The disadvantages of these physical methods are requirement of special machines/devices and its maintenance. The unpredictable process efficiencies, variation in results of quantities of impurities removed and the expenses associated with employing such physical techniques are other disadvantages. Chemical processes for the purification of calcium carbonate rich waste involves leaching or bleaching of impurities using special reagents. Disadvantages of these methods are that it require number of unit operations to perform the treatment. Moreover, single chemical may not be suitable to remove all the impurities. Removal and separation of excess chemical after the treatment is another disadvantage.

Another previously known and widely used method for the treatment of calcium carbonate rich waste is reburning within the kiln and removing it after cooling so as to obtain calcium oxide which is recycled in causticizing process in producing paper pulp or subjected to hydration followed by carbonation to produce precipitated calcium carbonate.

Reference may be made to US patent No. 4,018,877 (1977) to Richard Derek Anthony Woode according to which an aqueous suspension of calcium hydroxide at 25°C is agitated vigorously and reacted with a mixture of air and carbon dioxide. After 15 minutes (following the 'primary nucleation stage') a complex-forming agent for calcium ions, such as hydroxy carboxylic acid, especially hydroxy poly-carboxylic acids (for example Citric acid and malic acid) in the concentration range 0.001 to 5%, especially in the range 0.03 to 0.2% by weight based on the weight of the calcium carbonate produced, is added. The carbonation was stopped after about a further 50 minutes when the reaction mixture had just become acid to a phenolphthalein indicator. The mixture is then heated to 85°C over a period of 20 minutes and is allowed to age for 30 minutes. Carbonation is restarted at the much lower rate, maintaining the temperature to 85°C and after 20 to 40 minutes the pH of the batch fallen below 8.0. At this stage, 0.8% of stearic acid in ammonical solution is added and the mixture is stirred at 85°C for about 3 hours. The suspension is filtered and filter cake is extruded through 5/16 inch diameter holes to yield "granules" which are dried in an oven overnight at 130 ° C on a gauze-tray to produce calcium carbonate having 0.72 relative granule hardness and 0.07 micron ultimate particle size with a soft texture. The drawbacks of this process are that the total batch/production time is more than 5 hours during which temperature is maintained at 85°C for a period of 4 hours and drying of product at 130°C for overnight period. This makes this process highly energy consuming and is unattractive.

In US Patent No.4,133,894 (1979) to Hiroji Shibazaki et al., it is disclosed that the precipitates of uniform particle size can be continuously produced by repeating the step of carbonation reaction. In the first step of the process, a suspension of calcium hydroxide having solids concentration 0.1 to 10 weight % and temperature 15 to 30°C is sprayed in the form of droplets about 0.2 to 1.0 mm in diameter against a gas containing 10 to 40 volume % carbon dioxide in countercurrent contact therewith, the gas being passed at a specified superficial velocity of about 0.02 to 0.5 m/sec., whereby 5 to 15% of the calcium hydroxide is converted to calcium carbonate. In the second step of this process, the suspension resulting from the first step is sprayed in the form of droplets of about 1.0 to 1.5 mm diameter against a gas containing 15 to 35 volume % of carbon dioxide and passed upward through the column at a superficial velocity of about 1.5 to 2.5 m/sec whereby growth of the crystals is accomplished. In the third step of this process, the suspension resulting from second step is sprayed at a temperature of up to 30° C and in the form of droplet of about 1.5 to 2.0 mm in diameter into a column in countercurrent contact at a superficial velocity of about 1.5 to 3.0 m/sec. whereby the carbonation is completed. Thus, superfine calcium carbonate having average particle size less than about 0.1 to 3.0 microns is produced. The main drawback of this invention is that it needs control of number of parameters such as solids concentration, droplet size, temperature of suspension, gas velocity of carbon dioxide containing gas etc. at a time for three columns. Another drawback is use of multi-step-carbonation which require much capital investment for columns and pumps and the operating cost, compared to single stage carbonation.

US patent 5,342,600 (1994) issued to Bleakley, Ian S. et al. describes a method of preparing precipitated calcium carbonate which comprises, slaking quick lime in an aqueous medium, subjecting the said medium to continuous agitation during said slaking, passing a suspension of calcium hydroxide obtained after slaking through a sieve having an aperture size of 40-70 microns, subjecting the suspension to high energy high shear agitation with an impeller having a peripheral speed of 40-70 m/sec., so as to obtain finely dispersed calcium hydroxide, terminating the said high energy high shear agitation on achieving finely dispersed slaked lime, carbonating this suspension by passing through sufficient gas comprising carbon dioxide to cause the pH of the suspension to fall to neutral, during said carbonation step, subjecting the said suspension to continuous agitation to maintain the suspension with an impeller speed of 200-700 cm/sec. and separating precipitated calcium carbonate formed, The disadvantage associated with this method is requirement of generating high energy high shear agitation during slaking and carbonation. In several patents, use of additives to control the morphology and particle size is recommended. As per the US patent No.5,558,850 (1996) to Bleakley Ian S. et al., 0.1 to 2.0% by weight of reagent having one or more active hydrogen atoms e.g. polyhydric alcohol or phenol is added to the aqueous medium in which the quick lime is slaked. As per the US patent No.5,332,564 (1994) to Chapnerkar Vasant D. et al., quicklime is slaked in an aqueous solution containing about 0.1 to 2.0% by weight of a sugar for the production of rhombic shaped precipitated calcium carbonate and as per the US patent No.5,232,678 (1993) to Bleakley Ian S. et al., 0.01 to 1.5 % by weight of triethanolamine, mannitol, morpholine and solid boroheptonate for the preparation of clusters of calcium carbonate which give good light scattering properties when used as a paper filler or paper coating pigment. The US patent No. 4,714,603 (1987) to Vanderheiden, Denis B. mention the use of polyphosphates in an amount of 0.1 to 1.0 % by weight for getting precipitated calcite of substantially spherical morphology suitable for use in dull finish coated paper. The disadvantage associated with all these processes is the requirement of special reagents which adds to the production cost.

US Patent No.5,833,747 (1998) to Bleakley Ian S. et al., discloses a method for preparing precipitated calcium carbonate for use as a pigment in paper coating compositions. The method comprising the steps of carbonating an aqueous medium containing lime, at least partially dewatering the precipitated calcium carbonate containing suspension using a pressure filter device operating at a pressure of 5 to 10 MPa. and subjecting the precipitated calcium carbonate containing suspension to comminution by high shear attrition grinding with an attrition grinding medium such as silica sand having a median particle diameter in the range 0.1 to 4.0 mm. The product predominantly comprises aragonitic or scalenohedral crystals. The disadvantages of this method are that it required device for high shear attrition grinding with special grinding medium which is not separated during the process and pressure filter device for dewatering the precipitated calcium carbonate containing suspension.

The process as described in US Patent No.5,695,733 (1997) to Kroc Vicki J. et al., comprises the steps of forming a reaction mixture containing seed material of a scalenohedral particles of aragonite type calcium carbonate and adding lime slurry into the reaction mixture while simultaneously introducing carbon dioxide. The flow rates of the lime slurry and carbon dioxide are adjusted to control the solution conductivity of the reaction mixture to between 2 to 4 milli Siemens to form the clusters of calcite particles. The drawbacks of this process is that it require simultaneous addition of lime slurry and carbon dioxide for maintaining the solution conductivity. Moreover, control of flow rates of liquid phase and gaseous phase reactants simultaneously are difficult to administer.

A process for producing calcium carbonate particles having an average size of 0.1 to 1.0 micron is described in US patent No.5,811,070 (1998) to You Kyu Jae. The process comprising the steps of introducing carbon dioxide into a milk of lime containing a first reagent, such as sodium glutamate, sugar, and a mixture thereof in the range of 0.1 to 2.0 parts per 100 parts of calcium hydroxide initially present in the milk of lime, to prepare an aqueous suspension containing calcium carbonate particles of 0.4 micron in average size, adding a milk of lime into the above aqueous suspension, and continuously reacting a carbonated solution containing a second reagent including at least one of sodium polyacrylate and a bicarbonate in the range of 0.1 to 5.0 parts per 100 parts of calcium hydroxide present initially, with the aqueous suspension. Calcium carbonate particles according to the process are suitable as a filler for adhesives, paints, inks, papers and plastics, especially Polyethylene transparent films. The drawbacks associated with this process is addition of reagents in two stages, both of which are of different types. This makes the process complicated and unattractive.

US Patent No.4,367,207(1983) to Vanderheiden Dennis B., concerned with a process for preparing finely divided precipitated calcite in which carbon dioxide is introduced into an aqueous calcium hydroxide slurry containing anionic organo-polyphosphate polyelectrolyte with the carbonation started at a temperature above about 7°C and below about 18°C. The drawback of this process is that it requires anionic polyelectrolyte which add to the production cost. Another disadvantage is maintaining reaction temperature below ambient temperature, which require chilling plant and it is energy consuming.

### Object of the Invention

The main object of the present invention is to provide a process for the production of precipitated calcium carbonate from calcium carbonate rich by-product generated in chemical processing industry which obviates the drawbacks as detailed above.

Another object of the present invention is to develop an alternative source to limestone for producing precipitated calcium carbonate useful for commercial applications.

Yet another object of the present invention is to develop a process for purification, calcination, slaking and carbonation of calcium carbonate rich by-product having particle size in the range of 20 to 150 microns to produce precipitated calcium carbonate of particle size less than 20 microns.

Still another object of the present invention is to provide a continuous process for the purification of calcium carbonate rich by-product from nitrophosphate fertilizer plant in order to minimize solid waste.

Yet another object of the present invention is to provide pollution abatement measures in nitrophosphate fertilizer plant by utilization of the calcium carbonate rich by-product generated in such plant.

Still another object of the present invention is to produce high-value finely divided precipitated calcium carbonate useful as filler in paints, plastics, rubber, poly vinyl chloride (PVC) and paper from calcium carbonate rich by-product generated in nitrophosphate fertilizer plant.

These objects of the present invention will become apparent as further provided in the detailed description.

### Brief description of the Invention

The present invention relates to a process for the production of precipitated calcium carbonate from calcium carbonate rich by-product generated in industrial processes, specifically from nitrophosphate plant of fertilizer industry. The steps of the process is comprising :
calcination of calcium carbonate rich by-product generated in nitrophosphate fertilizer plant having moisture content up to 25% and particle size in the range 20 to 150 microns in a rotary calciner at a continuous feed rate of 5 to 20 kg/h at the calcination temperature of above 850° C and below about 950°C with the residence time of 60 to 90 minutes, so as to obtain calcined material having 75 to 88% available calcium oxide,
removing water vapors, volatile matters, ammonia, NOₓ and carbon dioxide during calcination using blower and scrubber,
slaking calcium oxide in a slaker provided with agitator rotating at 120 RPM to produce hydrated lime slurry having solids concentration in the range 15 to 23% by weight,
removing heavier and coarse particles by wet sieving through 60 to 100 mesh sieve, diluting the slurry to desired solids concentration in the range 10 to 20 % by weight,
taking the lime slurry to a carbonation tower and passing carbon dioxide-air mixture containing 25 % by volume carbon dioxide at superficial gas velocity of 10 to 15 cm/sec. maintaining the temperature in the range 25 to 45°C until the pH of the slurry fallen to near neutral,
separating the precipitates formed by known methods, drying and pulverizing the solids to get precipitated calcium carbonate,
optionally, treating the product slurry before filtration with fatty acid or its salt such as stearic acid or sodium stearate, at 95° C in the concentration range of 2 to 3.5% so as to obtain coated precipitated calcium carbonate which is industrially useful in a number of applications such as rubber, plastics, paints and PVC.

The invention is further directed to a precipitated calcium carbonate product having mean particle size about 4 to 6 microns and 100% particles less than 20 microns and a weight percent of calcium carbonate greater than 97.

### Summary of the Invention

The process described significantly purifies calcium carbonate rich by-product generated in nitrophosphate fertilizer plant to get precipitated calcium carbonate.

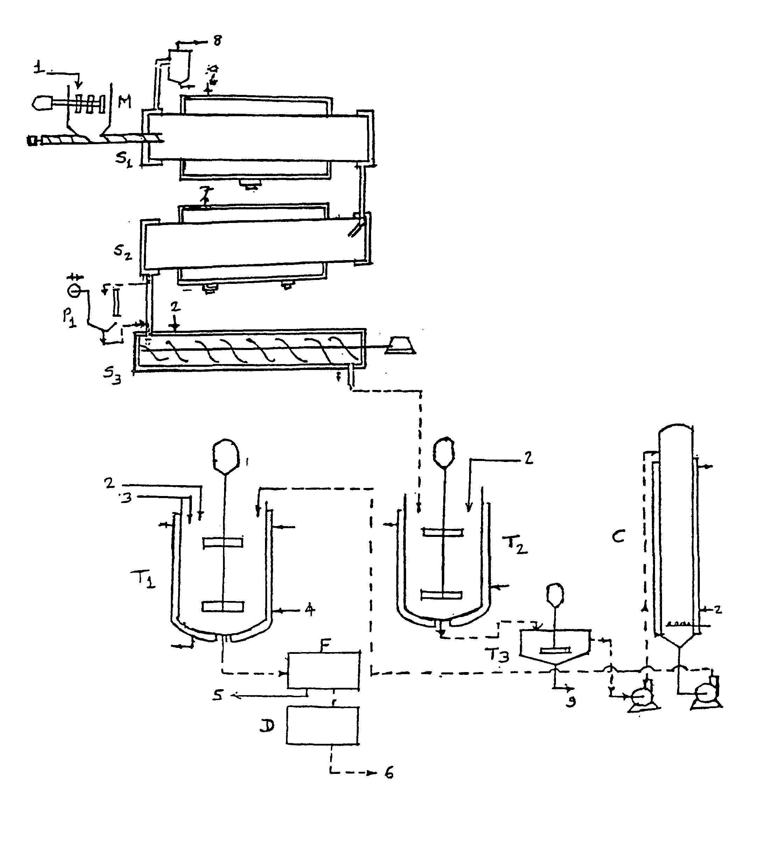

Figure 1 accompanying this specification represents the machines/ equipments of the unit used for the calcination and production of precipitated calcium carbonate from calcium carbonate rich by-product generated in nitrophosphate fertilizer plant. The unit embodies the following equipments:
M-paddle mixer cum screw feeder, S₁-Indirect rotary dryer, S₂-Indirect rotary calciner, S₃-Jacketed Cooler, P₁- Jaw crusher, T₁-Slurry tank; T₂ -lime slaker, T₃ -sedimentation tank, C- Carbonation tower with sparger, F- Filteration unit, pressure or rotary vacuum type and
D-Flash dryer. The numbers 1 to 9 in Fig. 1 indicate the following:
   1. Calcium carbonate rich by-product i.e. Feed material.
   2. Water
   3. Coating agent solution
   4. Steam
   5. Filtrate
   6. Product
   7. Flue gases
   8. Exhaust gases
   9.Grit / sediments.

Accordingly, the present invention provides a process for the production of precipitated calcium carbonate from calcium carbonate rich by-product generated in industrial processes, specifically from nitrophosphate fertilizer plant which comprises feeding continuously the wet calcium carbonate rich by-product containing up to 25% moisture and having particle size in the range of 20 to 150 microns, into a calciner maintained in the temperature range 850° to 950°C, with an angle of inclination 1.08 degrees and shell rotation speed of 0.5 to 2 RPM, at a feed rate of 5 to 20 kg/h, and provided with the arrangements to remove the liberated water vapors, carbon dioxide, ammonia and NOₓ containing exhaust gas into a scrubber wherein ammonia and NOₓ gases are scrubbed with water, taking the calcined outlet material coming out after residence time of about 30 to 90 minutes at the outlet rate of 2.5 to 6 kg/h, to a crusher, crushing the calcined material using a suitable crusher (e.g. Jaw crusher) to small lumps, cooling it in the temperature range of 40 to 50°C, slaking with water in a slaker provided with agitator to produce hydrated lime slurry having concentration 15 to 23% by weight, followed by removing heavier and coarser particles by sedimentation and / or wet sieving through 60 to 100 mesh sieve, diluting the slurry to desired concentration in the range 10 to 20% by weight, taking it in a carbonation reactor and passing carbon dioxide-air mixture containing 25% by vol. carbon dioxide at the gas velocity in the range 10 to 15 cm/sec., maintaining the temperature in the range of 25 to 45°C, until the pH of the slurry fallen to near neutral, separating the precipitated material formed by known methods, drying and pulverizing the solid to get precipitated calcium carbonate, optionally, treating the slurry before filtration with fatty acid derivative such as sodium stearate at 95°C in the concentration range 2.0 to 3.5% by weight for 10 minutes and allowing to cool to below 50°C with continuous stirring to get coated calcium carbonate followed by separation of the solid using known methods, drying and pulverizing the solid to get coated calcium carbonate.

In an embodiment of the present invention, calcium carbonate rich by-product having moisture content up to 25% may be used as a starting material. This provides special advantage of using calcium carbonate rich by-product as it is generated in the nitrophosphate fertilizer plant or stored for a longer period in silos. Therefore, the process provided by the present invention can be linked to nitrophosphate fertilizer plant and made continuous.

In another embodiment of the present invention, calcium carbonate rich by-product of nitrophosphate fertilizer plant can be utilized on a continuous basis to obtain quick lime, slaked lime and/or subsequently precipitated calcium carbonate for commercial applications.

In yet another embodiment of the present invention, the whiteness/brightness, lightness, fineness, oil absorption, alkalinity and purity are improved by the present invention.

In yet another embodiment of the present invention, moisture up to 25%, volatile matters 7 to 8% and ammonium compounds 0.1 to 0.3% (as ammonical Nitrogen) present in calcium carbonate rich by-product is removed.

In yet another embodiment of the present invention, nitrate impurities in the range 0.05 to 0.1% (as nitrate Nitrogen) is removed from the calcium carbonate rich by-product generated in fertilizer plant.

In yet another embodiment of the present invention, the material outlet rate from calciner may be adjusted to 2 to 6 kg/h by varying the rotation speed from 0.5 to 2 RPM at the angle of inclination 1.08.

In yet another embodiment of the present invention, the calcination of calcium carbonate rich by-product may be carried out at the temperature above 850°C and below 950°C to obtain calcined material having 75 to 88 % available CaO.

In yet another embodiment of the present invention, the cool and crushed calcined material may be slaked in water to obtain hydrated lime slurry having 15 to 23% solids in suspension.

In yet another embodiment of the present invention, the hydrated lime slurry may be diluted to a desired concentration in the range 10 to 20% by weight solids and wet sieved through 60 to 100 mesh to remove grit particles.

In yet another embodiment of the present invention, the hydrated lime slurry is subjected to carbonation in a bubble column reactor equipped with a suitable sparger and using carbon dioxide-air mixture having carbon dioxide concentration 25% by volume.

In yet another embodiment of the present invention, the carbonation may be accomplished by passing the mix gas at the rate of 10 to 15 cm/sec and maintaining the temperature in the range 25 to 45°C to achieve the neutral pH within about 60 to 140 minutes.

In yet another embodiment of the present invention, the precipitated calcium carbonate formed may be coated with fatty acid derivatives to obtain 2 to 3% total fatty matter in final product.

In yet another embodiment of the present invention, purity of the calcium carbonate rich by-product is improved from 88-90% to 97-99% by producing precipitated calcium carbonate.

### Detailed description of the Invention

Calcium carbonate rich by-product generated in industrial processes, specifically in nitrophosphate fertilizer plant, is containing 88-90% CaCO₃, total nitrogen 0.2-0.4%, ammonical nitrogen 0.1-0.3 %, nitrate nitrogen 0.05-0.1%, phosphate as P₂O₅ 1.0-1.5%, Fluoride as F⁻ 0.2-0.25%, mixed oxides (aluminum, iron, phosphates and matter insoluble in HCl) 3.5-4.0%, volatile matter 7-8%, loss on ignition 43-45%, soluble alkali as Na₂O 0.1-0.15 and acid insoluble matter 1.0-1.2%. Moreover, the pH of 5% aqueous suspension is 9-9.3, tapped bulk density 1.30-1.35 g/ml, brightness/whiteness 85% and particle size in the range 20 to 150 microns.

Attempts were made to purify the calcium carbonate rich by-product by the methods known in the prior art. Physical methods such as sieving, floatation, sedimentation and hydrocyclone separation were not successful which led to believe that the impurities present in calcium carbonate rich by-product are integral part of the material and not physically separate as in case of conventional raw material-limestone. Conventional chemical treatment methods were also found not suitable as the chemicals used were unable to leach the entrapped impurities.

Therefore, it was decided to calcine the calcium carbonate rich by-product to obtain calcium oxide. When it was heated at 900°C for one hour, the percent weight loss was 47.1 % by weight and X-Ray diffraction analysis indicated presence of only calcium oxide. Therefore, it was inferred that some of the impurities can be removed by calcination of calcium carbonate rich by-product, which can be subjected to hydration and carbonation to obtain precipitated calcium carbonate.

Therefore, in the present invention a process for the production of precipitated calcium carbonate from calcium carbonate rich by-product generated in industrial processes, specifically from nitrophosphate fertilizer plant is developed which comprises feeding continuously the wet calcium carbonate rich by-product containing up to 25% moisture and having particle size in the range of 20 to 150 microns into a calciner maintained at above 850°C and below 950°C, at a feed rate of 5 to 20 kg/h. The residence time of material in calciner is varied from 30 to 90 minutes by varying the rotation speed from 0.5 to 2 RPM at an angle of inclination of 1.08 degrees. Calciner is provided with the arrangements to remove the liberated water vapors, carbon dioxide, ammonia and NOₓ containing exhaust gas into a scrubber wherein ammonia and NOₓ gases are scrubbed with water. The outlet rate of calcined material varied from 2 to 10 kg/h. The calcined mass coming out is in big lump form. Therefore it is passed through a jaw crusher fitted in between calciner and material cooler for crushing it to small lumps. The outlet material from crusher is passed through water-circulated jacketed screw conveyer type material cooler for cooling the small lumps to near ambient temperature (40 to 50°C). Slaking of calcined material obtained from material cooler is carried out with water for one hour in a slaker provided with agitator rotating at 120 RPM to produce hydrated lime slurry having concentration 15 to 23% by weight Impurities present in the form of heavier and coarser particles were removed by sedimentation and / or wet sieving through 60 to 100 mesh sieve. The slurry is diluted to desired concentration in the range 10 to 20% by weight and transferred into a carbonation reactor provided with the sparger. Carbonation is accomplished by passing carbon dioxide - air mixture containing 25% by volume carbon dioxide at a gas velocity of 10 to 15 cm/sec. and maintaining the temperature in the range from 25 to 45°C until the pH of the slurry falls to near neutral and separating the precipitated material formed by known methods. Drying and pulverizing the solids to get precipitated calcium carbonate. Optionally, the product slurry is treated with fatty acid derivative emulsion or solution at 95°C to get 2 to 3.5% by weight total fatty matter in the coated calcium carbonate. The solids were recovered by known methods of filtration, drying and pulverizing to get coated calcium carbonate. The properties of Precipitated calcium carbonate and coated Precipitated calcium carbonate are given in Table 1 which indicated that it is useful as filler in paints, plastics, rubber and PVC.

**Table 1.**

| **Properties of Precipitated and Coated calcium carbonate.** | | | |
|---|---|---|---|
| **Sr.No.** | **Properties** | **Precipitated** | **Coated** |
| 1 | CaCO₃, (by Acidimetry ), % weight, Min. | 97 | 95 |
| 2 | pH (5% slurry) | 10-11 | 9.5-10.5 |
| 3 | Total Nitrogen, % weight | Not traceable | Not traceable |
| 4 | Ammonical Nitrogen, % weight | Not traceable | Not traceable |
| 5 | Nitrate Nitrogen, % weight | Not traceable | Not traceable |
| 6 | Phosphate as P₂O₅, % weight | less than 1.0 | less than 0.1 |
| 7 | Mixed oxides, % weight | 2.0-3.0 | 1.50-2.5 |
| 8 | Fluoride as F , % weight | 0.04 | 0.02 |
| 9 | Bulk density, tapped, g/ml | 0.40-0.45 | 0.35-.40 |
| 10 | Oil absorption, % weight | 60-100 | 80-100 |
| 11 | Whiteness / Brightness, % | 96-98 | 97-99 |
| 12 | Particle size, microns | less than 20 | less than 20 |
| 13 | Total Fatty Matter, % weight | NIL | 2.5-3.0 |

The percent available CaO in calcined material was determined by Sugar method which involved adding known weight of sample in 15% sugar solution and allowing it to dissolve for 3 hours, then filtering the solution to remove undissloved solids, and titrating an aliquot of filtrate with standard acid.

The product properties were determined as per the methods described as follows. The calcium carbonate content of the product is determined by adding accurately weighed about 2 g of sample in known volume of standard acid, allowing it to react completely and titrating the unused acid with standard alkali solution. Mixed oxides are determined by precipitating hydroxides from acidic solution of sample followed by ignition of hydroxides and weighing as oxides. Phosphates are determined by spectrophotometric method. Ammonical nitrogen, nitrate nitrogen and fluoride are determined by ion-selective electrodes. Tapped bulk density is measured by noting the volume of material after tapping 50 times of a known weight of sample in a calibrated cylinder. Whiteness/brightness is measured by measuring reflectance of sample and comparing with the reflectance of magnesium carbonate (considered as 100% whiteness) and that of carbon black (considered as zero percent whiteness). The particle size is determined using Mastersizer-2000 (Malvern, UK), particle size analyzer as dry powder. The total fatty matter is determined by extracting coated material with absolute alcohol, separating the same and evaporating the solvent to get coating material as residue.

The process for the production of precipitated calcium carbonate according to the present invention, uses a new kind of raw material which is a by-product generated in nitrophosphate fertilizer plant, hitherto not used for the purpose, having particle size in the range 20 to 150 microns and containing various types of impurities not usually found in the conventionally employed raw material - limestone. Considering the scientific knowledge about the type of impurities present in calcium carbonate rich by-product, it was possible to find out the data for such material with regard to its decomposition or sublimation temperature, which is described below:

Moisture can be removed by drying the material at 105-110°C for a sufficient period. Ammonium carbonate decompose at 58°C, ammonium bicarbonate decompose between 36-60°C and sublime, ammonium nitrate decompose at 210°C, ammonium chloride and fluoride sublimate at 335°C.

Calcium nitrate (anhydrous) melts at 561°C, calcium nitrate trihydrate melt at 51.5°C, calcium nitrate tetrahydrate decomposes at 132°C. Calcium mono- and di- phosphates decompose below 205°C, whereas calcium tri- and pyro-phosphate melt above 1200°C. Calcium hydroxide is converted to CaO and water between 580 and 600°C.

Aragonite type calcium carbonate decompose at 825°C, whereas calcite type decompose at about 895°C into Calcium oxide and Carbon dioxide. If calcium carbonate is heated above 1000°C it forms dead burnt / inactive Calcium oxide and liberate Carbon dioxide It was also known that active calcium oxide could be slaked to obtain hydrated lime which can be further carbonated to produce precipitated calcium carbonate.

The inventive steps involved in the process include
- Using raw material without pre-drying or crushing.
- Keeping the material in free flowing conditions throughout the processing.
- Removal of the chemical impurities during calcination.
- Improving brightness without using any special reagent.
- Calcination of very fine (20 to 150 micron) and highly dense (bulk density 1.3 to 1.35 g/ml) particles with minimum dusting.
- Avoiding the requirement of special type of material of construction of calciner by limiting the calcination to below 1000°C temperature.
- Limiting the effect of calcination to impurities without forming the dead burnt lime.
- Arrangements for scrubbing the liberated gases to avoid pollution surrounding environment.

The following examples are given by way of illustrations and therefore should not be construed to limit the scope of the present invention.

### EXAMPLE-1

The calcium carbonate rich by-product generated in nitrophosphate fertilizer plant, having 12% moisture was dried to a moisture content of <1% in a rotary dryer and fed at the rate of 10 kg/h into a rotary calciner preheated to 875°C with angle of inclination 1.08 and shell rotation speed of 1.5 RPM. The hold up time was 35 minutes and outlet rate was 5.2 kg/h. The material was found to have 37% by wt available CaO indicating incomplete calcination.

### EXAMPLE-2

The calcium carbonate rich by-product generated in nitrophosphate fertilizer plant, having 12% moisture was dried to a moisture content of <1% in a rotary dryer and fed at the rate of 10 kg/h into a rotary calciner preheated to 875°C with angle of inclination 1.08 and shell rotation speed of 0.75 RPM. The hold up time of material in calciner was 60 minutes and outlet rate was 5.10 kg/h. The calcined mass obtained was found to have 75% available CaO. The calcined material after crushing to small lumps is subjected to slaking for a period of one hour in a slaker so as to obtain a suspension having about 20% by weight solids. It was wet sieved through 100 mesh sieve to remove grit particles and diluted to obtain about 10% solids slurry. This slurry is subjected to carbonation by passing carbon dioxide-air mixture containing 25% by volume carbon dioxide at a superficial gas velocity of about 12.5 cm/sec. and maintaining the temperature in the range from 25 to 45°C until the pH of the suspension falls to near neutral. The carbonation was accomplished within about 90 minutes. Thereafter, the product is recovered by known methods. The product was having about 80% calcium carbonate, bulk density of about 0.50 g/ml and average particle size of above 10 microns.

### EXAMPLE-3

The calcium carbonate rich by-product generated in nitrophosphate fertilizer plant, having 12% moisture was dried to a moisture content of <1% in a rotary dryer and fed at the rate of 5 kg/h into a rotary calciner preheated to 950°C with angle of inclination 1.08 and shell rotation speed of 0.50 RPM. The hold up time was 90 minutes and outlet rate was 1.7 kg/h.The calcined mass obtained was found to have 88% available CaO. The calcined material after crushing to small lumps is subjected to slaking for a period of one hour in a slaker so as to obtain a suspension having about 20% by weight solids. It was wet sieved through 100 mesh sieve to remove grit particles and diluted to obtain about 10% solids slurry. This slurry is subjected to carbonation by passing carbon dioxide-air mixture containing 25% by volume carbon dioxide at a superficial gas velocity of about 12.5 cm/sec. and maintaining the temperature in the range from 25 to 45°C, until the pH of the suspension fallen to neutral. The carbonation was accomplished within 90 minutes. Thereafter, the product is recovered by known methods. The product was having about 98% calcium carbonate, bulk density of about 0.42 g/ml and average particle size in of about 6 microns with 100% particles less then 20 microns.

### EXAMPLE-4

The calcium carbonate rich by-product generated in nitrophosphate fertilizer plant, having 12% moisture was dried to a moisture content of <1% in a rotary dryer and fed at the rate of 10 kg/h into a rotary calciner preheated to 950°C with angle of inclination 1.08 and shell rotation speed of 0.50 RPM. The hold up time was 90 minutes and outlet rate was 4.08 kg/h.The calcined mass obtained was found to have 88% available CaO. The calcined material is subjected to slaking after crushing to small lumps for a period of one hour in a slaker so as to obtain a suspension having about 20% by weight solids. It was wet sieved through 100 mesh sieve to remove grit particles and diluted to obtain about 10% solids slurry. This slurry is subjected to carbonation by passing carbon dioxide-air mixture containing 25% by volume carbon dioxide at a superficial gas velocity of about 12.5 cm/sec. and maintaining the temperature in the range from 25 to 45°C, until the pH of the suspension fallen to neutral. The carbonation was accomplished within 90 minutes. Thereafter, the product is recovered by known methods. The product was having about 98% calcium carbonate, bulk density of about 0.42 g/ml and average particle size of about 6 microns with 100% particles less then 20 microns.

### EXAMPLE-5

The calcium carbonate rich by-product generated in nitrophosphate fertilizer plant, having 23% moisture was dried to a moisture content of <1% in a rotary dryer and fed at the rate of 10 kg/h into a rotary calciner preheated to 950°C with angle of inclination 1.08 and shell rotation speed of 0.50 RPM. The hold up time was 90 minutes and outlet rate was 4.18 kg/hr.The calcined mass obtained was found to have 88% available CaO. The calcined material is subjected to slaking after crushing to small lumps for a period of one hour in a slaker so as to obtain a suspension having about 20% by weight solids. It was wet sieved through 100 mesh sieve to remove grit particles and diluted to obtain about 10% solids slurry. This slurry is subjected to carbonation by passing carbon dioxide-air mixture containing 25% by volume carbon dioxide at a superficial gas velocity of about 12.5 cm/sec. and maintaining the temperature in the range from 25 to 45°C, until the pH of the suspension fallen to neutral. The carbonation was accomplished within 90 minutes. Thereafter, the product is recovered by known methods. The product was having about 98% calcium carbonate, bulk density of about 0.42 g/ml and average particle size of about 6 microns with 100% particles less then 20 microns.

### EXAMPLE-6

Pre-dried calcium carbonate rich by-product having particle size in the range 20 to 150 microns and moisture content <1%, was introduced into a Fluidized Bed Calciner at the rate of 10 kg/h. A fluidized bed was formed by passing hot air through the tower at a lower gas velocity of about 100 cm/sec. The temperature of calcination was maintained at around 950°C by injecting fuel at control rate. Within 60 minutes the desired calcined mass having 88 % available CaO is obtained at the outlet rate of 5.7.kg/h. The calcined material is subjected to slaking for a period of one hour in a slaker so as to obtain a suspension having about 20% by weight solids. It was wet sieved through 100 mesh sieve to remove grit particles and diluted to obtain about 10% solids slurry. This slurry is subjected to carbonation by passing carbon dioxide-air mixture containing 25% by volume carbon dioxide at a superficial gas velocity of about 12.5 cm/sec. and maintaining the temperature in the range from 25 to 45°C, until the pH of the suspension fallen to neutral. The carbonation was accomplished within 90 minutes. Thereafter, the product is recovered by known methods. The product was having about 98% calcium carbonate, bulk density of about 0.42 g/ml and average particle size of about 6 microns with 100% particles less then 20 microns.

### EXAMPLE-7

The by-product calcium carbonate with 1% moisture was calcined at 950°C in a rotary calciner for 90 minutes to obtain 88% active calcium oxide which was crushed to small lumps using a jaw crusher and cooled to below 50°C using water circulated jacketed screw conveyer type material cooler. 7 kg. of this material was added to 35 liters of water kept in a 50 liters capacity slaker, provided with a paddle type agitator operated at maximum speed of 120 RPM to obtain a 20% weight by volume slurry. The reaction was found to be exothermic with maximum rise in temperature of about 40°C. The slurry was continuously agitated for one hour so as to achieve complete conversion of calcium oxide to calcium hydroxide. This slurry is subjected to carbonation by passing carbon dioxide-air mixture containing 25% by volume carbon dioxide at a superficial gas velocity of about 12.5 cm/sec. and maintaining the temperature in the range from 25 to 45°C, until the pH of the suspension fallen to neutral. The carbonation was accomplished within 90 minutes. Thereafter, the product is recovered by known methods. The product was having about 98% calcium carbonate, bulk density of about 0.42 g/ml and average particle size of about 6 microns with 100% particles less then 20 microns.

### EXAMPLE-8

The by-product calcium carbonate with 1% moisture was calcined at 950°C in a rotary calciner for 90 minutes to obtain 88% active calcium oxide which was crushed to small lumps using a jaw crusher and cooled to below 50°C using water circulated jacketed screw conveyer type material cooler. It was further pulverized to -150 mesh powder. 7 kg. of this material was added to 35 liters of water kept in a 50 liters capacity slaker, provided with a paddle type agitator operated at maximum speed of 120 RPM to obtain a 20% weight by volume slurry. The slurry was continuously agitated for one hour so as to achieve complete conversion of calcium oxide to calcium hydroxide. The reaction was found to be exothermic with maximum rise in temperature of about 40°C. This slurry is subjected to carbonation by passing carbon dioxide-air mixture containing 25% by volume carbon dioxide at a superficial gas velocity of about 12.5 cm/sec. and maintaining the temperature in the range from 25 to 45°C, until the pH of the suspension fallen to neutral. The carbonation was accomplished within 90 minutes. Thereafter, the product is recovered by known methods. The product was having about 98% calcium carbonate, bulk density of about 0.42 g/ml and average particle size of about 6 microns with 100% particles less then 20 microns. This indicated that there was no advantage in using powdered calcined mass as compared to lumps in the slaking process.

### EXAMPLE-9

Seventy liters of the slaked lime slurry having about 20% solids, prepared under similar conditions as described in Example-7 is transferred to a jacketed carbonation reactor consisting of a bubble column provided with a specially designed sparger to create sufficient turbulence for continuous mixing within the column, arrangements for monitoring the reaction temperature and pH and cooling/heating arrangements using the jacket provided. The carbonation was accomplished within 90 minutes by passing mixture of air and CO₂ at a superficial gas velocity of about 12.5 cm/sec and maintaining the temperature in the range from 25 to 45°C, wherein the mixed gas contained 25% by volume CO₂ and remainder being air. Sufficient amount of gas mixture was passed to bring the pH of the slurry to neutral. When no further increase in pH more than 7 was observed, the carbonation was stopped. Thereafter, precipitated calcium carbonate formed was isolated by filtration, washing, drying and pulverizing. The product has about 98% purity, bulk density in the range 0.40-0.45 g/ml and average particle size of about 6 microns with 100% particles below 20 microns.

### EXAMPLE-10

The slurry of precipitated calcium carbonate obtained as per Example-7, was heated to 95°C under continuous agitation. To this, an emulsion of fatty acid derivative such as stearic acid with caustic soda, was added in an amount of 3.5% by weight of the calcium carbonate to be produced. The slurry was allowed to cool to 40-45°C under stirring to get coated product, which is isolated by filtration, washing, drying and pulverizing. The properties of this coated precipitated calcium carbonate is as given in Table 1.

### EXAMPLE-11

The slurry of precipitated calcium carbonate obtained as per Example-7, was heated to 95°C under continuous agitation. To this, an emulsion of fatty acid derivative such as stearic acid with caustic soda, was added in an amount of 2.0% by weight of the calcium carbonate to be produced. The slurry was allowed to cool to 40-45°C under stirring to get coated product, which is isolated by filtration, washing, drying and pulverizing. The content of total fatty matter in coated product was 1.6% by weight. Other properties of the product were similar to those given in Table 1.

### EXAMPLE-12

The by-product calcium carbonate with 1% moisture was calcined at 950°C in a rotary calciner for 90 minutes to obtain 88% active calcium oxide which was crushed to small lumps using a jaw crusher and cooled to below 50°C using water circulated jacketed screw conveyer type material cooler. 7 kg. of this material was added to 35 liters of water kept in a 50 liters capacity slaker, provided with a paddle type agitator operated at maximum speed of 120 RPM to obtain a 20% weight by volume slurry. The reaction was found to be exothermic with maximum rise in temperature of about 40°C. The slurry was continuously agitated for one hour so as to achieve complete conversion of calcium oxide to calcium hydroxide. This slurry is subjected to carbonation by passing carbon dioxide-air mixture containing 25% by volume carbon dioxide at a superficial gas velocity of about 15.0 cm/sec. and maintaining the temperature in the range from 25 to 45°C, until the pH of the suspension fallen to neutral. The carbonation was accomplished within 75 minutes. Thereafter, the product is recovered by known methods. The product was having about 97% calcium carbonate, bulk density of about 0.45 g/ml and average particle size of about 7 microns with 100% particles less then 25 microns.

### EXAMPLE-13

The by-product calcium carbonate with 1% moisture was calcined at 950°C in a rotary calciner for 90 minutes to obtain 88% active calcium oxide which was crushed to small lumps using a jaw crusher and cooled to below 50°C using water circulated jacketed screw conveyer type material cooler. 7 kg. of this material was added to 35 liters of water kept in a 50 liters capacity slaker, provided with a paddle type agitator operated at maximum speed of 120 RPM to obtain a 20% weight by volume slurry. The reaction was found to be exothermic with maximum rise in temperature of about 40°C. The slurry was continuously agitated for one hour so as to achieve maximum conversion of calcium oxide to calcium hydroxide. This slurry is subjected to carbonation by passing carbon dioxide-air mixture containing 25% by volume carbon dioxide at a superficial gas velocity of about 10.0 cm/sec.and maintaining the temperature in the range from 25 to 45°C, until the pH of the suspension fallen to neutral. The carbonation was accomplished within 140 minutes. Thereafter, the product is recovered by known methods. The product was having about 97% calcium carbonate, bulk density of about 0.45 g/ml and average particle size of about 7 microns with 100% particles less then 25 microns.

### EXAMPLE-14

The slaked lime slurry as obtained in Example-7 was diluted to 10% wt/vol. of CaO and taken in a continuous stirred tank reactor equipped with an agitator, having height/diameter of about 2. Keeping the slurry continuously agitated at 100 RPM, a mixture of CO₂ and air in the ratio of 30 : 70 and a space velocity of 2 cm/sec was introduced at ambient temperature. The reaction pH was found to come to neutral towards the completion of carbonation within 50 minutes. On stopping the gas flow the pH was increasing up to 8.0. The carbonation was continued to get a steady pH of 7.0 for further 10 minutes. The solid product was isolated, dried and pulverized to get precipitated calcium carbonate and coated as described in Example-10. The properties of coated precipitated calcium carbonate thus obtained was same as given in Table 1.

**The main advantages of the present invention are:**
1. Calcium carbonate rich by-product generated in industrial processes, specifically in nitrophosphate fertilizer plants, is converted to precipitated calcium carbonate by calcination, slaking and carbonation using conventionally used machinery.
2. Calcium carbonate rich by-product is converted to value added material suitable for applications in rubber, paint, PVC and plastics manufacture.
3. An alternative source to limestone for producing precipitated calcium carbonate useful for commercial applications is found out
4. Calcium carbonate rich by-product having fine particle size from 20 to 150 microns is successfully treated without contributing to pollution, commonly associated with such fine powders due to dusting.
5. A continuous process has been developed according to the present invention which can be linked with the plant generating calcium carbonate rich by-product. Thus, minimized the solid waste pollution caused by such by-products and improved the environmental quality of nitrophosphate fertilizer plant.
6. As the temperature of calcination of the calcium carbonate rich by-product is around 950 ° C, special type of material of construction is not required to be used in calciner.
7. Calcination provided special advantage of removing all the major impurities simultaneously and converting the calcium carbonate rich by-product to active calcium oxide. Therefore, not many unit operations are required in purification process.

## Claims

1. A process for the production of precipitated calcium carbonate, as a source alternative to limestone, from calcium carbonate rich by-product generated in industrial processes, specifically from nitrophosphate fertilizer plant, which comprises:
(a) feeding continuously the wet calcium carbonate rich by-product containing up to 25% moisture and having particle size in the range of 20 to 150 microns, into a calciner maintained at above 850°C and below 950°C with an angle of inclination of about 1.08 degrees and the shell rotation speed in the range 0.5 to 2.0 RPM, at a feed rate of about 5 to 20 kg/h and provided with the arrangements to remove the liberated water vapors, carbon dioxide, ammonia and NOₓ containing exhaust gas into a scrubber wherein ammonia and NOₓ gases are scrubbed with water;
(b) passing the calciner outlet material coming out at 2.0 to 6.0 kg/h after residence time of 30 to 90 minutes in calciner to a crusher, crushing the calcined material using a suitable crusher (e.g. Jaw crusher) to small lumps;
(c) cooling the small lumps to near ambient temperature (40 to 50°C) in a material cooler;
(d) slaking with water in a slaker provided with agitator rotating at 120 RPM to produce hydrated lime slurry having concentration 15 to 23% by weight, followed by;
(e) removing heavier and coarser particles by sedimentation and/or wet sieving through 60 to 100 mesh sieve, diluting the slurry to desired concentration in the range of 10 to 20% by weight;
(f) taking 10-20% by weight slurry in a carbonation reactor and passing carbon dioxide - air mixture containing 25-75% by vol. Carbon dioxide at the superficial gas velocity of 10 to 15 cm/sec. and maintaining the carbonation temperature in the range from 25 to 45°C until the pH of the slurry comes to near neutral which takes about 75 to 140 minutes;
(g) separating the precipitated material formed by known methods;
(h) drying and pulverizing the solid to get precipitated calcium carbonate having purity more than 97%, brightness of greater than 96%, average particle size of about 5 to 7 microns and 100% particles less than 20 microns, bulk density 0.40 to 0.45 g/ml and all other properties as mentioned in Table 1; and
(i) optionally, treating the slurry before filtration with fatty acid derivative emulsion at 95°C in the amount 2.0 to 3.5% by weight of calcium carbonate to be produced, to get coated calcium carbonate followed by separation of the solid using known methods, drying and pulverizing the solid to get coated calcium carbonate.

2. A process as claimed in claim 1 in step (a); wherein wet waste is charged into rotary calciner pre-heated to a temperature range of 850°C to 950°C to dry and remove accompanying impurities,

3. A process as claimed in claim 1 in step (b), wherein the calcined material is sent to crusher for breaking big lumps,

4. A process as claimed in claim 1 in step (c), wherein the lumps are cooled to 40° - 50°C.

5. A process as claimed in claim 1 in step (d), wherein the outlet material from cooler is slaked in water to obtain slurry in the concentration range of 15 to 23% by weight with continuous agitation up to one hour at maximum 120 RPM to convert calcium oxide to calcium hydroxide.

6. A process as claimed in claim 1 in step (f), wherein the said slaked lime slurry is subjected to carbonation, by passing there through sufficient quantity of a gas comprising 25% carbon dioxide in air to adjust the pH of the suspension to mere neutral, in a carbonation reactor provided with purger.

7. A process as claimed in claim 1 in step (f), wherein the temperature of carbonation is preferably in the range of 30 to 45°C.

8. A process as claimed in claim 1 in step (f), wherein said carbonation gas is admitted into the suspension of slaked lime to give space velocity in the range of 10 to 15 cm/sec.

9. A process as claimed in claim 1 in step (g), wherein the precipitated product is separated preferably by filtration or centrifugation.

10. A process as claimed in claim 1 in step (h), wherein the final product is dried and pulverised to get a product of purity 96%, brightness 97%, particle size is in the range of 5-20 microns and bulk density 0.40-0.65 g/ml.

11. A process as claimed in claim 1 in step (i), wherein the slurry of the product is optionally treated with an emulsion of fatty acid derivative for coating to obtain a product having industrial application.

12. A process as claimed in claims 1 to 11 is environmental friendly.

## Patentansprüche

1. Verfahren zur Erzeugung von sedimentiertem Kalziumkarbonat, Kalkstein, aus kalziumkarbonatreichen industriellen Nebenprodukten, insbesondere aus Nitrophosphatdüngeranlagen, das folgendes umfasst:
(a) kontinuierliches Einbringen des feuchten kalziumkarbonatreichen Nebenproduktes, das bis zu 25 % Feuchtigkeit enthält und eine Teilchengröße im Bereich von 20 bis 150 µm besitzt, in einen Brennofen, der auf einer Temperatur von mehr als 850 °C und von weniger als 950 °C gehalten wird, mit einem Neigungswinkel von etwa 1,08 Grad und einer Trommelrotationsgeschwindigkeit im Bereich von 0,5 bis 2,0 U/min, mit einer Zufuhrrate von etwa 5 bis 20 kg/h und der mit den Vorrichtungen versehen ist, um freigesetzten/s Wasserdampf, Kohlendioxid, Ammoniak und NOₓ enthaltendes Abgas in einen Nassreiniger zu transportieren, in dem Ammoniak und die NOₓ-Gase mit Wasser gereinigt werden.
(b) Weiterleiten des Brennofenausgangsmaterials, das mit 2,0 bis 6,0 kg/h nach einer Verweilzeit von 30 bis 90 Minuten aus dem Brennofen kommt, in einen Brecher, der das kalzinierte Material mit einem geeigneten Brechwerk (z.B. einem Backenbrecher) in kleine Brocken zerbricht;
(c) Abkühlen der kleinen Brocken auf nahezu Umgebungstemperatur (40 bis 50°C) in einer Materialkühleinrichtung;
(d) Löschen der kleinen Brocken mit Wasser in einer Löscheinrichtung mit Rührwerk, das mit 120 U/min läuft, und so gelöschten Kalkschlamm erzeugt, der eine Konzentration von 15 bis 23 Gewichtsprozent besitzt; anschließend
(e) Entfernen der schwereren und gröberen Teile durch Sedimentation und/oder durch feuchtes Sieben durch Siebe mit 60 bis 100 Mesh, Verdünnen des Schlamms auf die gewünschte Konzentration im Bereich 10 bis 20 Gewichtsprozent;
(f) Einbringen des Schlamms mit 10 bis 20 Gew.-% in einen Karbonisierungsreaktor und Durchgang einer Kohlendioxid-Luft-Mischung, die 25-75 Vol.-% Kohlendioxid enthält, mit einer oberflächlichen Gasgeschwindigkeit von 10 bis 15 cm/s und Aufrechterhalten der Karbonisierungstemperatur im Bereich von 25 bis 45 °C, bis der pH-Wert des Schlamms den Neutralwert fast erreicht, was etwa 75 bis 140 Minuten dauert;
(g) Abtrennen des gebildeten abgeschiedenen Materials mit bekannten Methoden;
(h) Trocknen und Pulverisieren des Feststoffs, um feinteiliges Kalziumkarbonat zu erhalten, das eine Reinheit von mehr als 97 %, einen Weißgrad von mehr als 96 %, eine durchschnittliche Teilchengröße von etwa 5 bis 7 µm und 100 % der Teilchen von weniger als 20 µm, eine Raumdichte von 0,40 bis 0,45 g/ml und alle anderen Eigenschaften wie in Tabelle 1 angegeben besitzt; und
(i) gegebenenfalls, Behandlung des Schlamms vor der Filtration mit einer aus Fettsäure abgeleiteten Emulsion bei 95 °C in einer Menge von 2,0 bis 3,5 Gewichtsprozent des herzustellenden Kalziumkarbonats, um beschichtetes Kalziumkarbonat durch Abtrennen des Feststoffs mit bekannten Methoden, Trocknen und Pulverisieren des Feststoffs zu gewinnen.

2. Verfahren nach Anspruch 1 in Schritt (a), in welchem der feuchte Abfall in einen rotierenden, auf einen Temperaturbereich von 850 °C bis 950 °C vorgeheizten Brennofen gefüllt wird, um begleitende Verunreinigungen zu trocknen und zu entfernen.

3. Verfahren nach Anspruch 1 in Schritt (b), in welchem das kalzinierte Material dem Brecher zum Zerkleinern großer Brocken zugeführt wird.

4. Verfahren nach Anspruch 1 in Schritt (c), in welchem die Brocken auf 40 °C bis 50 °C abgekühlt werden.

5. Verfahren nach Anspruch 1 in Schritt (d), in welchem das Austrittsmaterial aus dem Kühler in Wasser gelöscht wird, um Schlamm mit einer Konzentration im Bereich von 15 bis 23 Gewichtsprozent bei kontinuierlichem Rühren von bis zu einer Stunde bei maximal 120 U/min zu erhalten, um Kalziumoxid in Kalziumhydroxid umzuwandeln.

6. Verfahren nach Anspruch 1 in Schritt (f), in welchem der vorerwähnte gelöschte Kalkschlamm der Karbonisierung unterworfen wird, indem er in einem Karbonisierungsreaktor mit einer Ablasseinrichtung durch eine ausreichende Menge eines Gases läuft, das 25 % Kohlendioxid in Luft enthält, um den pH-Wert der Suspension annähernd auf einen neutralen Wert einzustellen.

7. Verfahren nach Anspruch 1 in Schritt (f), in welchem die Temperatur der Karbonisierung vorzugsweise im Bereich von 30 bis 45 °C liegt.

8. Verfahren nach Anspruch 1 in Schritt (f), in welchem das vorerwähnte Karbonisierungsgas der Suspension von gelöschtem Kalk hinzugefügt wird, um eine Raumgeschwindigkeit im Bereich von 10 bis 15 cm/s zu erreichen.

9. Verfahren nach Anspruch 1 in Schritt (g), in welchem das abgesetzte Produkt vorzugsweise durch Filtrieren oder Zentrifugieren abgetrennt wird.

10. Verfahren nach Anspruch 1 in Schritt (h), in welchem das Endprodukt getrocknet und pulverisiert wird, um ein Produkt mit 96 % Reinheit, 97 % Weißgrad, einer Teilchengröße im Bereich von 5-20 µm und einer Raumdichte von 0,40 bis 0,65 g/ml zu erhalten.

11. Verfahren nach Anspruch 1 in Schritt (i), in welchem der Schlamm des Produktes gegebenenfalls mit einer Emulsion aus einem Fettsäurederivat zur Beschichtung behandelt wird, um ein in der Industrie anwendbares Produkt zu erhalten.

12. Verfahren nach Anspruch 1 bis 11, das umweltfreundlich ist.

## Revendications

1. Procédé de production de carbonate de calcium précipité, en tant que source alternative par rapport au calcaire, à partir d'un sous-produit riche en carbonate de calcium généré par des processus industriels, spécifiquement à partir d'une usine d'engrais nitrophosphatés, qui comprend :
a) l'alimentation continue en un sous-produit riche en carbonate de calcium humide contenant jusqu'à 25% d'humidité et ayant une taille particulaire dans la plage de 20 à 150 micromètres, dans un calcinateur maintenu à plus de 850°C et à moins de 950°C, avec un angle d'inclinaison d'environ 1,08 degré et avec la vitesse de rotation de virole dans la plage de 0,5 à 2,0 tr/min, à une vitesse d'alimentation d'environ 5 à 20 kg/h et muni d'arrangements pour éliminer les gaz d'échappement libérés contenant des vapeurs d'eau, du dioxyde de carbone, de l'ammoniac et des NOₓ, dans un laveur dans lequel l'ammoniac et les gaz NOₓ sont lavés avec de l'eau;
b) le passage du matériau de sortie du calcinateur sortant à 2,0 à 6,0 kg/h après un temps de séjour de 30 à 90 minutes du calcinateur dans un broyeur, broyage du matériau calciné en petits morceaux au moyen d'un broyeur adéquat (par exemple un broyeur à mâchoires) ;
c) le refroidissement des petits morceaux à une température proche de la température ambiante (40 à 50°C) dans un refroidisseur de matériaux;
d) l'extinction avec de l'eau dans un extincteur de chaux muni d'un agitateur tournant à 120 tr/min pour produire une suspension de chaux hydratée présentant une concentration de 15 à 23% en poids, suivie de;
e) le retrait de particules plus lourdes ou plus grosses par sédimentation et/ou tamisage humide à travers un tamis de 250 à 149 micromètres (60 à 100 mesh), ce qui dilue la suspension à la concentration souhaitée dans la plage de 10 à 20% en poids;
f) l'introduction de la suspension à la concentration de 10 à 20% en poids dans un réacteur de carbonatation et le passage d'un mélange d'air et de dioxyde de carbone contenant 25 à 75% en volume de dioxyde de carbone à la vitesse du gaz superficielle de 10 à 15 cm/s et le maintien de la température de carbonatation dans la plage de 25 à 45°C jusqu'à ce que le pH de la suspension devienne presque neutre, ce qui prend 75 à 140 minutes.
g) la séparation du matériau précipité formé par des procédés connus;
h) le séchage et la pulvérisation du solide pour obtenir du carbonate de calcium précipité présentant une pureté supérieure à 97%, une brillance supérieure à 96%, une taille particulaire moyenne d'environ 5 à 7 micromètres et 100% des particules de taille inférieure à 20 micromètres, une densité apparente de 0,40 à 0,45 g/ml et toutes les autres propriétés telles que mentionnées dans le tableau I; et
i) facultativement, le traitement de la suspension avant filtration avec une émulsion de dérivé d'acide gras à 95°C en une quantité de 2,0 à 3,5% en poids de carbonate de calcium à produire, pour obtenir du carbonate de calcium revêtu, suivi d'une séparation du solide en utilisant des procédés connus, le séchage et la pulvérisation du solide pour obtenir du carbonate de calcium revêtu.

2. Procédé selon la revendication 1, étape a), dans lequel les déchets humides sont chargés dans un calcinateur rotatif, préchauffé à une plage de températures entre 850 et 950°C pour sécher et éliminer les impuretés incluses.

3. Procédé selon la revendication 1, étape b), dans lequel le matériau calciné est envoyé dans le broyeur pour broyer de gros morceaux;

4. Procédé selon la revendication 1, étape c), dans lequel les morceaux sont refroidis à 40-50°C.

5. Procédé selon la revendication 1, étape d), dans lequel le matériau de sortant du refroidisseur est éteint dans de l'eau pour obtenir une suspension dans une plage de concentrations de 15 à 23% en poids avec une agitation continue jusqu'à une heure à maximum 120 tr/min pour convertir l'oxyde de calcium en hydroxyde de calcium.

6. Procédé selon la revendication 1, étape f), dans lequel ladite suspension de chaux éteinte est soumise à une carbonatation en passant à travers un gaz comprenant 25% de dioxyde de carbone en air pour ajuster le pH de la suspension à la simple neutralité, dans un réacteur de carbonatation muni d'un épurateur.

7. Procédé selon la revendication 1, étape f), dans lequel la température de carbonatation est de préférence dans la plage de 30 à 45°c.

8. Procédé selon la revendication 1, étape f), dans lequel ledit gaz de carbonatation est admis dans la suspension de chaux éteinte pour donner une vitesse spatiale dans la plage de 10 à 15 cm/s,

9. Procédé selon la revendication 1, étape g), dans lequel le produit précipité est de préférence séparé par filtration ou centrifugation.

10. Procédé selon la revendication 1, étape h), dans lequel le produit final est séché et pulvérisé pour obtenir un produit d'une pureté de 96%, d'une brillance de 97%, d'une taille particulaire dans la plage de 5-20 micromètres et d'une densité apparente de 0,40-0,65 g/ml.

11. Procédé selon la revendication 1, étape i), dans lequel la suspension du produit est facultativement traitée avec une émulsion d'un dérivé d'acide gras destinée à revêtir, pour obtenir un produit ayant une application industrielle.

12. Procédé selon les revendications 1 à 11, lequel est respectueux de l'environnement.
